# EUROPÄISCHE PATENTSCHRIFT

(11) **EP 1 858 723 B1**
(45) Veröffentlichungstag und Bekanntmachung des Hinweises auf die Patenterteilung: **02.08.2017**
(21) Anmeldenummer: 06708206.5
(22) Anmeldetag: 10.02.2006
(51) Int. Cl.: B60K 15/04

(54) **DECKELLOSER STUTZENABSCHLUSS FÜR EINEN EINFÜLLSTUTZEN**
CAPLESS FILLER NOZZLE END-PIECE FOR A VEHICLE FUEL TANK
EMBOUT DE REMPLISSAGE D'UN RÉSERVOIR DE CARBURANT SANS BOUCHON

(30) Priorität: 10.02.2005 DE 202005002223 U; 12.11.2005 EP 05110674
(43) Veröffentlichungstag der Anmeldung: 28.11.2007
(60) Teilanmeldung: 13179801.9
(73) Patentinhaber: Gerdes GmbH, 50170 Kerpen (DE)
(72) Erfinder: GERDES, Ralf, 50935 Köln (DE)
(74) Vertreter: Bungartz, Klaus Peter
(86) Internationale Anmeldenummer: PCT/EP2006/050864
(87) Internationale Veröffentlichungsnummer: WO 2006/084908

(56) Entgegenhaltungen:
- EP-A- 0 602 440
- EP-A- 1 262 355
- EP-A- 1 319 545
- EP-A1- 1 555 154
- EP-A1- 1 586 478
- EP-A2- 1 625 964
- WO-A-01/68397
- US-A- 2 206 948
- US-A- 3 845 877
- US-A- 5 884 958

## Beschreibung

Die Erfindung betrifft einen ohne Deckel verschließbaren Stutzenabschluss für einen Einfüllstutzen eines Tanks eines Kraftfahrzeugs nach dem Oberbegriff des Anspruchs 1. Ferner betrifft die Erfindung ein Kraftfahrzeug mit einem solchen deckellosen Stutzenabschluss.

Der Stutzenabschluss weist in dem Rohrstück eine untere Dichtklappe und oberhalb der unteren Dichtklappe einen Verschlussmechanismus auf, der eine obere Einfüllöffnung und zumindest eine, die obere Einfüllöffnung im geschlossenen Zustand wenigstens partiell überdeckende, obere Abdeckung aufweist. Der Verschlussmechanismus ist dabei derart ausgebildet, dass die obere Abdeckung durch Einsetzen eines Ausgaberohrs einer Zapfpistole in das Rohrstück zur Freigabe der oberen Einfüllöffnung verdrängt wird, um das Einschieben des Ausgaberohrs durch die obere Einfüllöffnung und die untere Dichtklappe zu ermöglichen. Dabei weisen beinahe weltweit die Zapfpistolen einen unterschiedlichen Rohrdurchmesser für Diesel- und Ottokraftstoffe auf.

Ein gattungsgemäßer Stutzenabschluss ist aus der EP 1 586 478 A1 bekannt. Dieser Stutzenabschluss weist zwei gegenüberliegende Schiebelemente mit nach innen abgeschrägter, schiefer Ebene auf, gegen die ein Ausgaberohr einer Zapfpistole gedrückt werden kann. Die beiden Schiebeelemente werden durch einen U-förmigen Federbügel zusammengehalten, der vor dem Auseinanderdrücken von der Zapfpistole heruntergedrückt werden muss, wobei eine zu kleine Zapfpistole dies nicht schaffen soll, da sie zwischen die Bügel des Federbügels passt und so keine Druckkraft übertragen kann. Hierdurch wird ein Entriegeln des Stutzens eines dieselgetriebenen Kraftfahrzeugs durch die kleinere Zapfpistole für Benzin vermieden.

Der Nachteil des bekannten Stutzabschlusses besteht neben der Tatsache, dass der Benutzer unmittelbar gegen die dichtende Verschlussklappe drückt und diese möglicherweise im Versuch der Betankung mit einer falschen Sorte beschädigt, auch darin, dass der Federbügel auf einer Seite auch von einer dünnen Zapfpistole getroffen und heruntergedrückt werden kann. Insbesondere wenn dies am vorderen Teil erfolgt, kann somit auch eine dünne Zapfpistole den Mechanismus entriegeln und eine Fehlbetankung wird möglich.

Aus der EP 1 555 154 A1 ist eine ähnliche Lösung bekannt. Auch hier werden konisch zulaufende Backen durch eine Zapfpistole auseinandergedrückt, hier verriegeln allerdings die Backen selbst die Dichtklappe, die hierzu mit einem der Schwenkachse gegenüberliegenden Halteabschnitt im geschlossenen Zustand in einer Aufnahme gehalten ist, die sich durch Auseinanderdrücken der Backen öffnet und den Halteabschnitt freigibt.

Neben den genannten Nachteilen hat die den weiteren Nachteil, dass dann, wenn der Benutzer die Zapfpistole leicht gekippt nach dem Betanken herauszieht, die Backen schon schließen können, bevor sich die Dichtklappe geschlossen hat. Dann liegt der Halteabschnitt nicht in der Aufnahme sondern wird von unten gegen die geschlossenen Backen gedrückt. Nachfolgend ist die Sicherung nicht mehr aktiv und es kann auch eine dünnere Zapfpistole eingeführt werden. Weitaus problematischer ist jedoch die dann nicht vollständig geschlossene Dichtklappe.

Stutzenabschlüsse dieser Art sind ferner aus der DE 203 09 799.8 U1 bekannt. Bei diesem Stutzenabschluss wird der Stutzen über zwei Klappen verschlossen, die übereinander im Stutzen angeordnet sind und durch die Kraft jeweils einer Verschlussfeder in Anlage an eine Dichtfläche gehalten sind. Durch Einstecken des Ausgaberohrs einer Zapfpistole oder einer Tülle eines Reservekanisters werden die beiden Klappen nach unten gedrückt, so dass sich eine durchgängige Öffnung ergibt.

Obwohl diese Verschlüsse eine gute Dichtung auch ohne zusätzlichen Tankdeckel bieten, wäre es doch wünschenswert, wenn sie weiter verbessert werden könnten und eine Sicherung gegen Fehlbetankung aufweisen würden. Insbesondere im Falle moderner Motoren ist es zunehmen wichtig, auf die sichere Kraftstoffsorte zu achten, da beispielsweise moderne Einspritzsystem einer Common-Rail-Dieseleinspritzung über den Schmierstoffgehalt des Dieseltreibstoffs geschmiert werden und bereits nach kurzer Betriebszeit mit einem Ottokraftstoff schweren Schaden nehmen können.

Weitere Stutzenabschlüsse mit einer Sicherung gegen Fehlbetankung sind aus der EP 1 319 545 A bekannt, bei der einzelne Haken vorgesehen sind, die von der Zapfpistole verdrängt werden müssen, wobei diese hierzu eine definierte Dicke aufweisen muss. Diese Lösung ist aufwändig in der Herstellung und beschädigungsanfällig. Eine ähnliche Lösung zeigt die EP 1 262 355 A mit einer Sicherung in Form von zu verdrängenden Sperrhaken.

Die US 3 845 877 A zeigt eine drehbare Schlussklappe, die manuell in Öffnungsposition verdreht werden muss, um die Zapfpistole in den Rohrstutzen einschieben zu können.
Aufgabe der Erfindung ist es, einen Stutzenabschluss zu schaffen, der möglichst einfach herstellbar ist und bei möglichst sicherem Verschluss des Stutzens eine einfachere und sichere Möglichkeit bietet, die Gefahr einer Fehlbetankung zu minimieren. Eine weitere Aufgabe der Erfindung ist es, ein Kraftfahrzeug zu schaffen, das eine erhöhte Sicherheit beim Betanken oder im Unfallfall aufweist.
Diese Aufgabe wird nach der Erfindung bezüglich des Stutzenabschlusses durch einen Stutzenabschluss nach Anspruch 1 und bezüglich des Kraftfahrzeugs durch ein Kraftfahrzeug nach Anspruch 19 gelöst. Durch die Erfindung kann nun zwar noch nicht jede Fehlbetankung ausgeschlossen werden, dass Risiko wird jedoch deutlich minimiert. Weltweit ist es üblich, dass bleifreie Ottokraftstoffe mit Zapfpistolen gezapft werden, die einen geringeren Durchmesser des unteren Endes des Ausgaberohrs aufweisen als Dieselkraftstoffe. Somit kann erfindungsgemäß diese Tatsache genutzt werden, eine Entriegelung des Stutzenabschlusses bei Verwendung der falschen Zapfpistole zu vermeiden und es ist zumindest möglich zu verhindern, dass ein Fahrzeug mit Ottomotor mit Dieselkraftstoff und ein Fahrzeug mit Dieselmotor mit Ottokraftstoff betankt wird.
Sofern der Mineralölhandel weitere Zapfpistolenmodelle künftig verwenden sollte, wird natürlich eine weitere Erhöhung der Fehlersicherheit möglich werden. Im Idealfall kann bei Verwendung eines sortenspezifischen Durchmessers des Ausgaberohr jede Fehlbetankung bereits im Ansatz vermieden werden, was nicht nur zur Vermeidung von unnötigen Reparaturkosten sondern auch zur Entlastung der Umwelt beiträgt, dass Fehlmengen dann nicht mehr entsorgt werden müssen. Auch Mietwagenfirmen können dann darauf vertrauen, dass die Fahrzeuge nicht mehr vorsätzlich oder fahrlässig mit ungeeignetem Benzin betankt werden, um beispielsweise Kosten bei der Rückgabe zu sparen oder weil der Fahrer der jeweiligen Landessprachen nicht mächtig ist und aus Unwissenheit zur falschen Zapfpistole greift.
Wenn im Rahmen dieser Anmeldung der Begriff "deckellos" verwendet wird, meint dies natürlich nicht, dass der Einfüllstutzen keinen internen Deckel aufweist. Vielmehr ist hierunter zu verstehen, dass kein herkömmlicher Tankdeckel im üblichen Sinne mehr verwendet werden muss, aus Sicherheitsgründen möglicherweise aber könnte. Der Begriff "Rohrstück" soll im Rahmen dieser Anmeldung den Einlaufbereich des Stutzens beschreiben, der natürlich keinen zylindrischen Querschnitt aufweisen muss, sondern jeden beliebigen, konstanten oder sich über die Tiefe des Stutzens verändernden Querschnitt aufweisen kann. Ferner soll der Anwendungsbereich der Erfindung nicht auf Tankdeckel beschränkt sein, obwohl die Anwendung im Folgenden als bevorzugte Verwendung beschrieben wird. Ein Einsatz ist prinzipiell bei allen Vorratsbehältern innerhalb und außerhalb der Fahrzeugtechnik möglich, im Rahmen des Kraftfahrzeugs insbesondere auch im Bereich des Einfüllstutzens für das Motor oder Getriebeöl.

Der erfindungsgemäße Stutzenabschluss ist geprägt durch die Möglichkeit, die obere Einfüllöffnung zu verriegeln und diese Verriegelung nur dann aufheben zu können, wenn die "richtige" Zapfpistole angesetzt wird. Dies kann auf vielfältige Weise geschehen. Eine Möglichkeit besteht zum Beispiel darin, dass die Zapfpistole zwei gegenüberliegende Klemmbacken zur Seite drückt, die wiederum eine Schwenkplatte, die die obere Einfüllöffnung verdeckt oder von unten verschließt, verriegeln. Dabei sind bei den derzeit am häufigsten verwendeten Zapfsystemen folgende Fälle möglich:
1. Bei dem Versuch ein Fahrzeug mit Ottomotor fälschlicherweise mit Dieselkraftstoff zu betanken, wird die Zapfpistole der Dieselzapfsäule einen größeren Durchmesser aufweisen als die "erwartete" Zapfpistole der Zapfsäule für Ottokraftstoff. In diesem Fall ist die Zapfpistole zu groß, um in den Funktionsbereich des Einfüllstutzens eingesetzt zu werden, sie kann damit nicht die Klemmbacken nach außen drücken und der Bediener wird den Fehler daran erkennen, dass sich die obere Abdeckung nicht öffnen und die Zapfpistole nicht ein den Einfüllstutzen einführen lässt.
2. Bei dem Versuch ein Fahrzeug mit Dieselmotor fälschlicherweise mit Ottokraftstoff zu betanken, wird die Zapfpistole der Zapfsäule für den Ottokraftstoff einen kleineren Durchmesser aufweisen als die "erwartete" Zapfpistole der Dieselzapfsäule. Die Zapfpistole ist nun nicht dick genug und wird daher nicht in der Lage sein, gleichzeitig beide Klemmbacken zu berühren oder gar auseinanderzudrücken. Vielmehr wird maximal nur eine einzelne Klemmbacke erfasst, so dass die Verriegelung hiermit dann ebenfalls nicht gelöst werden kann, auch wenn in diesem Fall das freie Ende der Zapfpistole in den Funktionsbereich einsetzbar ist.

Eine vorteilhafte Ausgestaltung der Erfindung sieht als Funktionsbereich eine schiefe Ebene mit einem seitlich hervorstehenden Rand vor, wobei auf der schiefen Ebene das Ausgaberohr abgleiten kann. Diese schiefe Ebene stellt eine relativ zur Längsachse des Rohrstücks des Einfüllstutzens um einem Winkel α geneigte Abgleitfläche für die Zapfpistole dar, die die oberen Einfüllöffnung vor Freigabe der Verriegelung schützt.

Der Benutzer setzt die Zapfpistole zunächst etwas neben der eigentlichen Einfüllöffnung an den oberen Anfang der Abgleitfläche an und lässt dann das Ausgaberohr längs der Abgleitfläche gleiten. Durch diese Bewegung kann dann ein Mechanismus angetrieben werden, der die Entriegelung des Verschlussmechanismus bewirkt. Dies kann, wie oben bereits beschrieben, durch das Auseinanderdrücken der Klemmbacken erfolgen, wobei eine zu große Zapfpistole nicht zwischen den erhabenen Rand der schiefen Ebene einsetzbar ist und somit auf dem Rand abgleiten würde, damit aber nicht in Kontakt mit den Klemmbacken kommt.

Diese seitliche Last auf die äußere Mantelfläche des Ausgaberohrs kann jedoch die Zapfpistole einem Verschleiß unterliegen, da diese üblicherweise aus Aluminium gefertigt ist und somit wenig verschleißfest ist.

Eine andere Ausgestaltung drückt daher die Verriegelungsmittel gegen eine Rückstellfeder nach unten. Dies ist wesentlich materialschonender und erlaubt darüber hinaus die Verwendung längerer und besser geführter Federn. Auch hier kann ein erhabener Rand verhindern, dass eine zu große Zapfpistole die Verriegelungsmittel herunterdrücken kann, sofern dies notwendig sein sollte. Ein weiterer Vorteil des erhabenen Randes liegt in dem Schutz der Verriegelungsmittel vor unbeabsichtigtem Aufdrücken, etwa infolge eines Unfalls.

Bei Ansetzen des Ausgaberohrs an die schiefe Ebene werden dann zum Beispiel zwei gegenüberliegend angeordnete Verriegelungsmittel heruntergedrückt, wobei dies dann bevorzugt dazu führt, dass dann erst ein Abgleiten des Ausgaberohrs auf der Abgleitfläche möglich wird.

Hierzu ist ein durch die Verriegelung festgelegtes und über den beschriebenen Mechanismus entriegelbares Schiebeelement vorgesehen, das neben und oberhalb der Abgleitfläche seitlich verschiebbar gelagert ist. Dieses Schiebeelement wird nach Niederdrücken der Verriegelungsmittel durch das Ausgaberohr seitlich verdrängt, wobei hierdurch auch das Ausgaberohr der Zapfpistole zusammen mit der weiteren Abwärtsbewegung weiter zur Seite geschoben wird, bis das Schiebeelement die obere Einfüllöffnung vollständig freigibt. Nachfolgend kann das Ausgaberohr dann in den Rohrstutzen eingeführt werden und dort die untere Dichtklappe niederdrücken.

Weitere Merkmale des erfindungsgemäßen Stutzenabschlusses sind Über- und Unterdruckventile, die die untere Dichtklappe und, sofern die obere Abdeckung ebenfalls dichtend ausgebildet ist, auch diese obere Abdeckung bei Auftreten von kritischen Drücken, etwa durch Wärmedehnungen oder die motorseitige Entnahme von Kraftstoff aus dem Tank, einen entsprechenden Druckausgleich bewirken.

Über der unteren Dichtklappe kann ferner ein Wasserkanal angeordnet sein, der eindringendes Wasser oder Kondenswasser ableitet, damit es bei der nächsten Öffnung der unteren Dichtklappe nicht in den Tank gelangt.

Ein weiterer Aspekt der Erfindung, der auch losgelöst von dem beanspruchten deckellosen Einfüllstutzen anwendbar ist, ist die Verwendung eines Stutzenabschlusses, der auf einen bereits bekannten Stutzen aufsetzbar ist. Erfahrungsgemäß ist die grundlegende Änderung des Stutzens während einer laufenden Fahrzeugproduktion aus wirtschaftlichorganisatorischen Gründen schwierig durchführbar. Soll zum Beispiel ein bereits konstruiertes System während der Fertigung auf eine deckellose Betankung umgestellt werden, kann der Stutzenabschluss auf eine Schnittstelle des Stutzens aufgesetzt werden.

Allerdings soll der Fahrer nicht in der Lage sein, den Stutzenabschluss selbst abzunehmen, vielmehr sollte die der Fachwerkstatt überlassen bleiben. Um ein unbefugtes Entfernen zu vermeiden, kann daher der Stutzenabschluss mit einem Rückhaltemittel versehen sein, dass leicht auf den Einfüllstutzen aufsetzbar ist, aber nur unter Zerstörung oder zerstörungsfrei durch Einsatz eines Spezialwerkzeuges entfernt werden kann. Ein solches Rückhaltemittel kann zum Beispiel von Federelementen gebildet sein, die bei oder nach Aufschrauben des Stutzenabschlusses auf das übliche Endstück eines Einfüllstutzens in Ausnehmungen nach der Art eines Sprengringes einrasten und nur über ein Spezialwerkzeug wieder zurückgezogen werden können, dass beispielsweise zwischen die Wandung des Einfüllstutzens und des Stutzenabschlusses einsetzbar ist, wobei das eingesetzte Werkzeug dann zwei Enden des offenen Sprengrings zusammenziehen kann und so den formschlüssigen Eingriff aufhebt.

Optional können der Stutzenabschluss und der Stutzen zwei getrennte Bauteile bilden, die über eine besondere Verbindung miteinander verbindbar sind, so dass es möglich ist, den Stutzenabschluss ohne den Einfüllstutzen selbst auszutauschen. Dies hat den besonderen Vorteil, dass nach Aufnahme einer größeren Anzahl von mechanischen Teilen möglicherweise häufiger ein Reparaturfall im Bereich des Stutzenabschlusses auftreten kann und dieser ohne Austausch des gesamten Stutzens erledigt werden kann.

Weist beispielsweise der Stutzenabschluss die oben beschriebenen Verriegelungsklappen auf, könnten diese mechanischen Teile beschädigt werden. Das Stutzenrohr selbst ist üblicherweise ein Blech- oder Kunststoffrohr, insbesondere ein Kunststoffrohr wird häufig auch mit einem Kunststofftank fest verschweißt. In jedem Fall ist der Austausch des gesamten Einfüllstutzens bis zum Tank hin vergleichsweise aufwändig, da dieser Bereich nur schwer und nur von der Fahrzeugunterseite aus zugänglich ist. Je nach Fahrzeugkonstruktion kann der Tank auch nur über den Innenraum mit Ausbau weiterer Teile zugänglich sein, so dass die Notwendigkeit besteht, einen Stutzenabschluss leichter und einfacher reparieren zu können als durch Austausch des gesamten Einfüllstutzens.

Hierzu weist ähnlich wie oben bereits für den Fall des nachrüstbaren Stutzenabschlusses für handelsübliche Bajonett- oder Schraubverschlüsse der Einfüllstutzen eine lösbare Verbindung auf. Der Einfüllstutzen besteht aus dem Stutzenabschluss und dem eigentlichen Stutzenrohr, das zum Tank hin geführt ist und dort mit dem Tank lösbar oder fest verbunden sein kann. Die Verbindung zwischen Stutzenabschluss und Stutzenrohr erfolgt nun über eine Verbindung, die derart ausgestaltet ist, dass sie bevorzugt nur über ein Spezialwerkzeug lösbar ist. Ist es nicht gewünscht, eine Missbrauchsmöglichkeit auszuschließen, kann die Verbindung auch einfach lösbar ausgebildet sein.

Eine über ein Spezialwerkzeug lösbare Verbindung kann beispielsweise von federnden Rastelementen gebildet sein. Diese Rastelemente können auch hier nach der Art eines Sprengrings ausgebildet sein. So kann der Stutzenabschluss auf das Stutzenrohr aufgeschoben sein, wobei der Sprengring zwischen der Innenwandung des Stutzenabschlusses und der Außenwandung des Stutzens angeordnet sein kann. Eine zusätzliche Dichtung, etwa in Form eines Gummiringes, kann die erforderliche Dichtigkeit herstellen. Über ein Spezialwerkzeug können dann die Enden des Sprengringes zum Lösen zusammen- oder auseinander gedrückt werden.

Eine weitere Möglichkeit besteht darin, dass die federnden Elemente im Inneren des Stutzenabschlusses angeordnet sind und durch Ausnehmungen in der Wandung des Stutzenabschlusses in Verriegelungseinbuchtungen in der Innenwandung des Stutzenrohrs eingreifen. Diese federnden Elemente können dann von innen über das Spezialwerkzeug erfasst und nach innen zurückgezogen werden, um den Stutzenabschluss abziehen zu können. Auch alle anderen üblichen Verwindungsmittel sind natürlich möglich.

Schließlich ist es auch möglich, dass der Stutzenabschluss zunächst einstückig und fest mit dem Stutzenrohr verbunden ist und nur im Reparaturfall ein lösbarer Stutzenabschluss nach Entfernen, beispielsweise durch Absägen des defekten Stutzenabschlusses, aufgesetzt wird. Hierfür kann das Stutzenrohr bereits entsprechende Vorkehrungen aufweisen, damit nach Entfernen des vorhandenen Stutzenabschlusses ein Ersatzteil nach den oben genannten Prinzipien angesetzt werden kann.

Eine weitere bevorzugte Ausgestaltung der Erfindung weist eine zusätzliche Sicherung gegen Undichtigkeiten im Unfallfalle auf. Auch diese Sicherung ist unabhängig von der speziellen Ausgestaltung des Stutzenabschlusses, wie oben beschrieben und in den Ansprüchen beansprucht, einsetzbar. Erforderlich hierfür ist lediglich die Tatsache, dass ein Doppelverschluss über eine obere und eine untere Dichtklappe vorliegt.

Im Falle eines Unfalles besteht immer die Möglichkeit, dass der Stutzenabschluss in Folge einer sich verformenden Kante oder eines aufprallenden Gegenstandes mit einer unzulässig hohen Querkraft beaufschlagt wird. In diesem Fall wird die Querkraft in den Stutzen eingeleitet, der ohne besondere Vorkehrungen möglicherweise an einer nicht zu kontrollierenden Stelle brechen könnte. Insbesondere weil die Stutzengeometrie im Wesentlichen an die Form des Unterbodens und die Position des Stutzenabschlusses einerseits und des Kraftstoffbehälters andererseits angepasst ist, wird sich irgendwo im Verlauf des Stutzenrohrs eine Schwachstelle in Folge einer Änderung der Geometrie ergeben, die möglicherweise als Bruchstelle in Erscheinung treten könnte.

Um ein unteres Abbrechen des Stutzenrohrs zu vermeiden, da dies möglicherweise zum Austritt von Treibstoff führen könnte, ist das Stutzenrohr aus einem geeigneten Material gefertigt, das einerseits bruchfest ist und andererseits eine hinreichende Flexibilität aufweist, um einen gewissen, unfallbedingten Verformungsgrad ohne Leckage zu überstehen. Eine noch bessere Sicherheit lässt sich dadurch erreichen, dass zwischen der oberen und der unteren Dichtklappe eine Sollbruchstelle angeordnet wird. Diese Sollbruchstelle bewirkt, dass ein in die Wandung des Stutzenabschlusses eingeleitetes Bruchmoment dazu führt, dass der obere Teil des Stutzenabschlusses abbrechen kann, ohne dass der untere Teil des Stutzenabschlusses oder gar das darunter liegende Stutzenrohr in Mitleidenschaft gezogen wird. In diesem Fall ist immer noch die untere Dichtklappe vorhanden, die den Stutzenabschluss ausreichend abdichtet, um Austreten von Kraftstoff selbst bei verunfalltem Fahrzeug zu verhindern.
Die Sollbruchstelle kann bevorzugt durch ein in der Wandung des Stutzenabschlusses zwischen oberer und unterer Dichtklappe angeordnete Vertiefung vorgesehen sein. Diese kann einfach in das Kunststoffmaterial des Stutzenabschlusses eingeprägt werden oder bereits bei Herstellung vorgesehen werden. Oberhalb und unterhalb der Vertiefung können zusätzliche Materialverstärkungen vorgesehen werden, um den Effekt der Sollbruchstelle zu verstärken.
Alternativ kann der Stutzenabschluss auch zweiteilig ausgebildet sein, so dass ein oberer Teil mit der oberen Dichtklappe in einen unteren Teil mit der unteren Dichtklappe eingesteckt ist, wobei die Steckverbindung über eine Dichtung, beispielsweise über einen Gummiring, abgedichtet ist. Der obere und der untere Teil des Stutzenabschlusses weisen dann jeweils einen rohrförmigen Grundkörper auf, die unter Einschluss des Gummirings ineinander gesteckt sind.
Hier kann die Sollbruchstelle dadurch realisiert werden, dass die Steckverbindung aufgelöst werden kann. Damit dies nicht irrtümlich geschieht, ist die Steckverbindung bevorzugt so ausgestaltet, dass nach Montage des Stutzenabschlusses über Rastzungen der obere und der untere Teil des Stutzenabschlusses untrennbar miteinander verkeilt sind, wobei bei Auftreten der kritischen Bruchkraft die Rastzungen brechen und der obere Teil abgezogen werden kann. Bei dieser Ausgestaltung kann der Überlappungsbereich des oberen und unteren Teils des Stutzenabschlusses recht gering gehalten bleiben, um bei Auftreten der Querkraft ein sicheres Lösen im Bereich der Sollbruchstelle zu gewährleisten.

Weitere Merkmale und Vorteile der Erfindung ergeben sich aus den Unteransprüchen und aus der nachfolgenden Beschreibung eines bevorzugten Ausführungsbeispiels der Erfindung anhand der Zeichnungen.

In den Zeichnungen zeigt:
- Figur 1: eine Seitenansicht im Schnitt auf einen erfindungsgemäßen Stutzenabschlusses,
- Figur 2: die Einzelheit "Z" aus Figur 1,
- Figur 3: eine weitere Ausgestaltung eines Stutzenabschlusses in einer Draufsicht,
- Figur 4: einen Stutzenabschluss mit einer Sollbruchstelle in einer Seitenansicht im Schnitt,
- Figur 5: einen Einfüllstutzen mit dem oberen Teil eines Stutzenrohrs und einem darauf befestigten Stutzenabschluss und
- Figur 6: eine Ausgestaltung des oberen Teiles eines Stutzenabschlusses mit Verriegelungsstift zur Verriegelung über eine Zentralverriegelung.

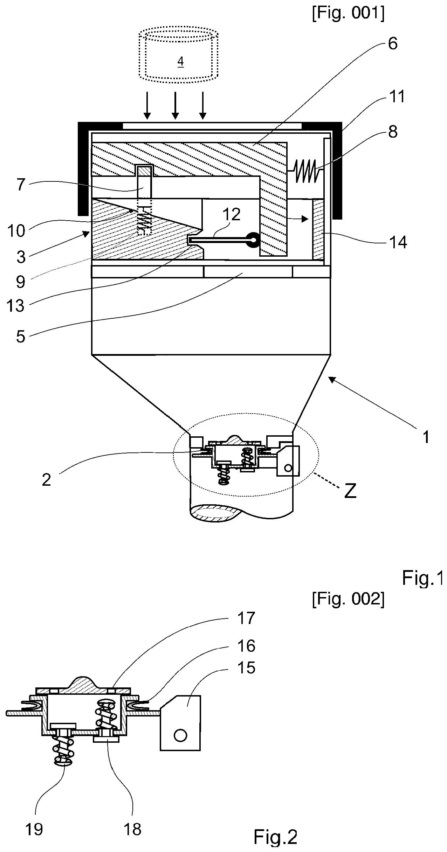

In Figur 1 ist eine Seitenansicht eines erfindungsgemäßen Ausführungsbeispiels dargestellt, das nachfolgend beschrieben wird, ohne dass die Erfindung oder der Schutzbereich der vorliegenden Anmeldung auf diese konkrete Ausgestaltung beschränkt sein soll.

Der in Figur 1 dargestellte Stutzenabschluss wird von einem Rohrstück gebildet, dessen Querschnitt sich in Richtung der Öffnung zunächst konisch erweitert. Unterhalb des erweiternden Abschnittes ist die untere Dichtklappe 2 vorgesehen, die den Stutzen abdichtet. Hierzu ist die Dichtklappe über eine Feder gegen eine Dichtfläche (hier nicht dargestellt) angestellt. Weiter weist der Stutzenabschluss die als Einzelheit "Z" in Figur 2 in einer vergrößerten Darstellung wiedergegebenen Über- und Unterdruckventile sowie einen hier ebenfalls nicht dargestellten Wasserablauf auf, über den eindringendes Wasser abgeleitet werden kann.

Im oberen Bereich ist zunächst die obere Einfüllöffnung 5 vorgesehen, durch die das Ausgaberohr 4 der Zapfpistole in den Stutzen eingeführt werden kann, dass dann bei weiterem Eindringen die untere Dichtklappe 2 öffnet. Über der oberen Einfüllöffnung 5 ist ein Verschlussmechanismus 3 angeordnet, der ohne Öffnung desselben ein Einführen der Zapfpistole verhindert.

Um Fehlbetankungen nun zu minimieren oder möglichst zu vermeiden soll nun dieser Verschlussmechanismus 3 nur dann geöffnet werden können, wenn die "richtige" Zapfpistole, also die Zapfpistole zum Einfüllen geeigneten Treibstoffs angesetzt wird.

Hierzu ist in den oberen Stutzenabschnitt des Rohrstücks 1 ein Ringelement 14 eingesetzt, in dem wiederum ein Schiebeelement rechtwinklig zur Stutzenachse verschiebbar geführt ist. Das Schiebeelement weist eine U-förmige Form auf, wobei es ebenso auch als rundum geschlossenes Element ausgebildet sein könnte. Wesentlich ist lediglich hier, dass es einen Durchlass aufweist, durch den das Ausgaberohr 4 hindurch gesteckt werden kann.

Durch das durchgesteckte Ausgaberohr 4 werden nun Verriegelungsmittel 7 niedergedrückt, die mit oberen Bereichen formschlüssig in Ausnehmungen in dem Schiebeelement eingreifen. Durch das Niederdrücken geraten nun die Verriegelungsmittel 7 außer Eingriff, das Schiebeelement wird so freigegeben und kann dann in seitliche Richtung verschoben werden.

Unterhalb des Schiebeelementes ist eine schiefe Ebene als Abgleitfläche 10 ausgebildet, die in die innere Mantelfläche des Ringelementes 14 eingearbeitet ist. Diese Abgleitfläche 10 ist um einen Winkel α relativ zur Stutzenachse des Rohrstücks 1 geneigt und bewirkt einen seitlichen Versatz des durch das Schiebeelement eingesteckten Ausgaberohrs 4, wenn dieses weiter in den Rohrstutzen 1 eingeführt wird.

Durch den seitlichen Versatz wird das Ausgaberohr 4 nun gegen das Schiebeelement gedrückt, was wiederum ein seitliches Wegschieben des Schiebeelements bewirkt, bis der Bereich oberhalb der oberen Einfüllöffnung vollständig für das Einschieben der Zapfpistole freigegeben ist. Diese Entriegelung und das nachfolgende Verschieben des Schiebeelementes ist jedoch nur dann möglich, wenn die beiden gegenüberliegenden Verriegelungsmittel 7 durch den unteren Rand der Zapfpistole niedergedrückt werden. Ist diese nicht groß genug, weil der Durchmesser des Ausgaberohrs 10 zu klein ist, kann entweder kein oder nur ein Verriegelungsmittel 7 niedergedrückt werden, was die Verriegelung aber nicht aufhebt.

Das Schiebeelement ist so ausgebildet, dass es nach dem Verschieben auch dann noch die Verriegelungsmittel 7 unten hält, wenn der untere Rand der Zapfpistole seitlich nach recht bewegt und nicht mehr oberhalb der Verriegelungsmittel 7 angeordnet ist. In diesem Stadium drückt der linke Bereich des Schiebeelementes die Verriegelungsmittel 7 herunter.

Alternativ zu den beiden Verriegelungsmitteln 7 können natürlich auch weitere Verriegelungsmittel 7 verwendet werden. Wichtig ist nur, dass die nicht geeignete Treibstoffsorte über eine Zapfpistole verabreicht wird, die nicht alle Verriegelungsmittel 7 betätigen kann. Das Herunterdrücken der Verriegelungsmittel 7 hat den besonderen Vorteil, dass ein Verschleiß der Zapfpistole weitgehend ausgeschlossen ist. Insbesondere können keine seitlichen Riefen eingetrieben werden.

Bei der dargestellten bevorzugten Ausgestaltung sind die Verriegelungsmittel 7 jeweils von einem formschlüssig in eine Ausnehmung in der oberen Abdeckung 6 eingreifenden Arretierstift gebildet, der gegen die Kraft einer Sicherungsfeder 9 durch das freie Ende des Ausgaberohrs 4 nach unten verlagerbar ist. Hierdurch "rastet" der Arretierstift aus der Ausnehmung in dem als obere Abdeckung eingesetzten Schiebeelement aus.

Das Schiebeelement weist im Sinne dieser Sicherung einen Sperrbereich auf, was nichts anderes heißt, als dass es in Verschlussstellung mit einem Teil seines Körpers oberhalb der oberen Einfüllöffnung angeordnet ist. Erst durch das seitliche Verschieben wird diese dann freigeben. Die schiefe Abgleitfläche 10 weist insbesondere eine Schiefstellung relativ zur Achse des Rohrabschnitts 1 von 20° bis 80°, bevorzugt von 35° bis 55° und, wie hier dargestellt weiter bevorzugt von 45° auf.

Bevorzugt ist, wie hier gezeigt, der Verschlussmechanismus über Abdeckkappe 11 geschützt, die ein Langloch zum Einstecken des Ausgaberohrs 4 aufweist, wobei die Breite des Langlochs etwas größer als der Durchmesser des Ausgaberohrs 4 ist und die Länge des Langlochs im Wesentlichen dem Verschiebeweg des Schiebeelementes entspricht.

Oberhalb der oberen Einfüllöffnung 5 ist hier eine zusätzliche Verschlussklappe 12 vorgesehen, die einen Diebstahlschutz und eine weitere Dichtung bewirkt. Hierzu ist sie gelenkig an dem Schiebeelement angeordnet wird mit diesem verschoben. An der gegenüberliegenden Seite greift sie in eine Eingriffsnut 13 ein, die die zusätzliche Verschlussklappe 12 im geschlossenen Zustand festlegt. Eine Rückstellfeder stellt nach Abziehen der Zapfpistole die Klappe 12 wieder zurück, damit diese dann bei Zurückgleiten des Schiebeelementes wieder in die Eingriffsnut 13 eingreifen kann.

Die Verriegelungsmittel können zusätzlich über die Zentralverriegelung des Kraftfahrzeuges derart blockierbar ist, dass eine Entriegelung nur bei in Öffnungsstellung befindlicher Zentralverriegelung möglich ist. Hierzu kann zum Beispiel, wie auch schon bei der Sicherung bekannter Tankklappen, ein elektromotorisch getriebener Dorn eine Bewegung des Schiebeelementes unterbinden.

Schließlich kann der Stutzenabschluss als eigenständiges Bauteil zur Verbindung mit einem bekannten Rohrstutzen ausgebildet sein oder natürlich auch unmittelbar in den Stutzen eines Tanks eingeformt sein. Wenn er ein eigenständiges Bauteil ist, kann dieses mit dem meist aus Kunststoff gefertigten Rohrabschnitt verschweißt werden oder auch über die handelsübliche Verbindung, die bisher für das Aufsetzen und Befestigen eines Tankdeckel genutzt wurde, mit dem Stutzen verbunden werden. Dies hat den besonderen Vorteil, dass keine Veränderung an dem Stutzen notwendig ist, wenn ein Fahrzeug auf die deckellose Betankung umgerüstet wird. Bevorzugt weist er dann eine Abnahmesicherung auf, die nur mittels eines Werkzeuges lösbar ist, damit der Fahrer selbst den Tankverschluss nicht mehr manipulieren kann.

In Figur 2 ist die untere Dichtklappe 2 in einer vergrößerten Darstellung wiedergegeben. Die Dichtklappe 2 besteht aus einer an einem Schwenklager 15 angeordneten Schwenkklappe, die durch die Kraft einer Verschlussfeder gegen einen Lagerrand im Rohrstutzen 1 des Einfüllstutzens unter Einschluss einer Dichtung 16 gedrückt wird.

Im oberen Teil weist die Dichtklappe 2 einen Druckbereich auf, gegen den sich der untere Rand der Zapfpistole abstützen kann. Zum Zentrieren der Zapfpistole ist im mittleren Bereich eine nach oben hervorspringende Erhöhung vorgesehen. Der Druckbereich weist zumindest einen, im gezeigten Beispiel zwei Durchlässe 17 auf, über die Druck in den Innenraum der Dichtklappe 2 eintreten können.

Im unteren Bereich ist die Dichtklappe 2 mit einem Überdruckbypass 19 und einem Unterdruckbypass 18 versehen, über die Unter- bzw. Überdrücke kompensiert werden können. Hierfür können alle Arten von Druckventilen verwendet werden, wobei im gezeigten Ausführungsbeispiel ein federbelasteter Stößel verwendet wird, der sich mit einem oberen Tellerrand auf einer Seite des Dichtklappenbodens abstützt und mit einem Stielkörper unter Belassung einer Atmungsöffnung durch eine Durchgangsöffnung im Dichtklappenboden hindurchgeführt ist, wobei zwischen dem freien Ende des Stielkörpers und dem Dichtklappenboden eine Feder eingespannt ist. Die Abdichtung erfolgt hier über den Tellerrand, der zur Betätigung des jeweiligen Bypass 18, 19 nach Überwinden der Federkraft von dem Dichtklappenboden abhebt.

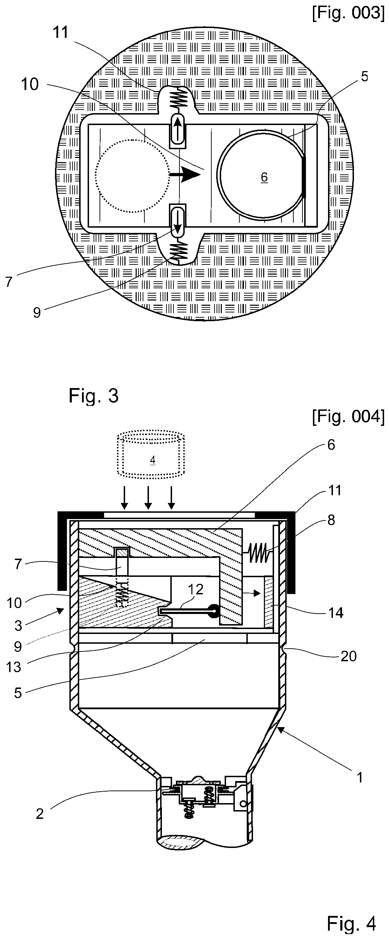

In Figur 3 ist eine weitere Ausgestaltung des Stutzenabschlusses dargestellt, die an Stelle der nach unten zu drückenden Verriegelungsmittel 7 aufweist, die von dem Ende des Ausgaberohrs 4 der Zapfpistole seitlich verdrängt werden. Diese Verdrängung kann wie im dargestellten Ausführungsbeispiel unmittelbar durch Kontakt mit der Zapfpistole erfolgen, es ist jedoch auch möglich, dass die Zapfpistole in einen (nicht gezeigten) Schiebekörper eingesetzt werden kann, der zusammen mit dem Ende des Ausgaberohrs 4 nach unten geschoben werden muss. Dieser Schiebekörper weist dann eine Durchgangsöffnung auf, durch die bei Erreichen der Endposition die Zapfpistole in den Stutzenabschluss eingeschoben werden kann.

In Figur 4 ist ein erfindungsgemäßer Stutzenabschluss mit einer Sollbruchstelle 20 dargestellt, die im vorliegenden Fall von einer von außen in die Stutzenwandung eingeprägten Vertiefung gebildet ist, so dass sich hier eine Materialschwächung ergibt. Diese Sollbruchstelle 20 hat den Sinn, dass bei Auftreten einer unzulässigen Querkraft der obere Bereich des Stutzenabschlusses unter Aufrechterhaltung der Dichtwirkung der unteren Dichtklappe 2 abbrechen kann und so trotz einer unzulässig hohen Querkraft die Dichtwirkung des Einfüllstutzens im Wesentlichen aufrechterhalten bleibt.

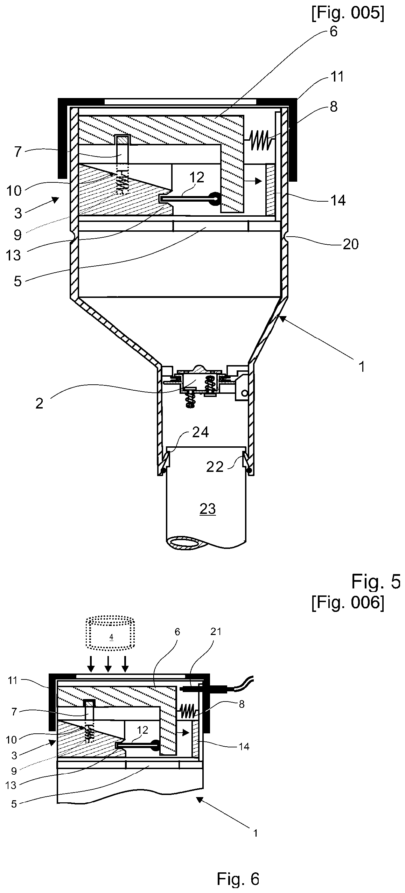

Figur 5 zeigt die Verbindung eines Stutzenabschlusses mit einem Rohrstutzen 23 eines Tankstutzensystems, das zweiteilig ausgebildet ist, wobei jedoch der Stutzenabschluss nur unter Zerstörung des Verbindungsmittels oder mittels eines Spezialwerkzeugs von dem Rohrstutzen 23 gelöst werden kann.

Zur Verbindung mit dem Rohrstutzen 23 wird der Stutzenabschluss auf den Rohrstutzen aufgeschoben, wobei federnde Haltezungen 22 in Ausnehmungen des Rohrstutzens 23 derart einrasten, dass ein Abziehen nur unter Zerstörung der federnden Haltezungen 24 oder durch Einführen des Werkzeugs möglich ist. Die eingerasteten, federnden Haltezungen 22 hintergreifen zur formschlüssigen Verbindung mit den Enden Haltekanten 24 des Rohrstutzens 23, so dass der Stutzenabschluss fest gehalten ist. Eine (hier nicht dargestellte) Dichtung dichtet die Verbindung ab.

In Figur 6 ist eine weitere Ausgestaltung des erfindungsgemäßen Einfüllstutzens dargestellt, bei der ein Verriegelungsstift vorgesehen ist, der über die Schaltorgane einer zentralen Schließanlage des Kraftfahrzeugs betätigbar ist. Dieser dornförmige Verriegelungsstift bezieht den Stutzenabschluss mit in die Zentralverriegelung des Kraftfahrzeugs ein, indem er bei verschlossenem Zustand gegen die obere Abdeckung 6 drückt, so dass diese nicht verschiebbar ist. Dies hat die Folge, dass hier die zusätzliche Verschlussklappe 12, die im dargestellten Ausführungsbeispiel die obere Dichtklappe bildet, nicht aus dem Eingriff mit der Verriegelungsnut 13 kommen kann, somit die obere Dichtklappe in Form der Verriegelungsklappe 12 verschlossen bleibt, sofern der Verriegelungsstift eingedrückt bleibt. Erst durch Öffnen der Zentralverriegelung wird dieser Verriegelungsstift zurückgezogen, so dass das Betankungssystem durch die Zentralverriegelung freigegeben wird.
Der Verriegelungsstift erlaubt auch weitere zusätzliche Funktionen. So kann beispielsweise bei laufendem Motor von der Fahrzeugelektrik selbsttätig der Verriegelungsstift gegen die obere Abdeckung 6 angestellt werden, so dass ein Betanken des Fahrzeugs nur bei abgeschaltetem Motor möglich ist. Über die gleiche Funktion lässt sich auch das Betanken eines Fahrzeugs bei eingeschalteter Fremdheizung, insbesondere einer Standheizung, vermeiden. Dies erhöht die Sicherheit vor fahrlässigen Missachtungen von Vorschriften durch den Fahrer.
Ferner kann die Funktion des Verriegelungsstiftes auch an Crashsensoren oder sonstige Elemente der Fahrdynamikregelung gekoppelt sein, so dass rechtzeitig vor Verunfallen des Fahrzeugs der Stutzenabschluss nochmals verschlossen wird, so dass auch der an sich schon unmögliche Fall eines Wegdrückens der oberen Abdeckung 6 durch einen Fremdkörper oder eine sich verformende Karosseriekante zusätzlich vermeidbar ist.

Über den Verriegelungsstift kann nun die Verriegelung einer üblicherweise bei einem Kraftfahrzeug zur Abdeckung des Tankstutzens vorgesehenen Schwenkklappe entbehrlich werden. Dies ermöglicht es zum einen, erneut die bereits früher vorgenommene Gestaltung der Karosserie mit sichtbarem Stutzenabschluss, bei dem beispielsweise die obere Abdeckung zur Erzeugung eines interessanten optischen Effektes aus Edelstahl gefertigt sein kann, und erspart darüber hinaus das Verschieben des Verriegelungsstiftes gegen einen relativ weit außen liegenden Blechbereich der Karosserie, der möglicherweise hierdurch beschädigt werden könnte, wenn etwa die Schwenkklappe nicht vollständig geschlossen ist und der Verriegelungsstift sich nicht in die vorgesehene Öffnung verschiebt, sondern gegen deren Rand drückt.

In Verbindung mit der Sollbruchstelle 20 kann der Verriegelungsstift auch im Bereich der unteren Dichtklappe 2 vorgesehen werden, entweder als einziger Verriegelungsstift oder als zusätzlicher Verriegelungsstift. Dies hätte den Vorteil, dass durch Abbrechen des oberen Stutzenabschlusses die Verriegelung nicht aufgehoben wird, insbesondere wenn in Verbindung mit der Crash-Sensorik ein Verriegeln selbsttätig erfolgen soll, würde dies nicht durch Abbrechen des verriegelten Teiles wieder ausgehoben werden.

Für die Zentralverriegelungsfunktion des Stutzenabschlusses ist erforderlich, dass ein Verriegelungsstift vorgesehen ist, eine der schwenkbaren Dichtklappen in ihrer Schwenkbewegung fest liegt oder der einen längs beweglichen Funktionsbereich des Stutzenabschlusses in seiner Beweglichkeit blockiert war, sofern durch die Längsbeweglichkeit die Zugänglichkeit in das Innere des Rohrstutzens 23 hergestellt wird.

### Bezugszeichenliste:

- 1: Rohrstück
- 2: Untere Dichtklappe
- 3: Verschlussmechanismus
- 4: Ausgaberohr
- 5: Obere Einfüllöffnung
- 6: Obere Abdeckung
- 7: Verriegelungsmittel
- 8: Verschlussfeder
- 9: Sicherungsfeder
- 10: Abgleitfläche
- 11: Abdeckkappe
- 12: Zusätzliche Verschlussklappe
- 13: Verriegelungsnut
- 14: Haltering
- 15: Schwenklager der Dichtklappe
- 16: Dichtung der Dichtklappe
- 17: Durchlass in dem Druckbereich der Dichtklappe
- 18: Unterdruck Bypass
- 19: Überdruck Bypass
- 20: Sollbruchstelle
- 22: Federnde Halteelemente
- 23: Rohrstutzen
- 24: Haltekante

- α: Neigungswinkel der Abgleitfläche relativ zur Längsachse des Rohrstücks

## Patentansprüche

1. Deckellos verschließbarer Stutzenabschluss für einen Einfüllstutzen eines Tanks eines Kraftfahrzeugs mit
• einem oberen Eintrittsraum, der einen Einsteckbereich für eine Zapfpistole bildet und von einer Seitenwandung umgeben ist,
• einem Verschlussmechanismus (3), der eine obere Einfüllöffnung (5) und zumindest eine, die obere Einfüllöffnung (5) im geschlossenen Zustand wenigstens partiell überdeckendeobere Abdeckung (6) aufweist, die von einem zumindest in seitliche Richtung verschiebbaren Schiebeelement gebildet und derart ausgebildet ist, dass sie durch Einführen eines Ausgaberohrs (4) einer Zapfpistole in den Eintrittsraum zur Freigabe der oberen Einfüllöffnung (5) verdrängt wird, um das Einschieben des Ausgaberohrs (4) durch die obere Einfüllöffnung (5) zu ermöglichen und mit
• wenigstens einem Verriegelungsmittel (7), dass zur Bildung einer Sicherung gegen Befüllen mit ungeeignetem Kraftstoff die obere Abdeckung (6) im geschlossenen Zustand blockiert und derart ausgebildet ist, dass es in Abhängigkeit der sortenspezifischen Form des Ausgaberohrs (4) nur bei Befüllung mit geeignetem Kraftstoff entriegelbar ist,
wobei der Eintrittsraum als Rohrstück (1) mit konstantem oder veränderlichen Querschnitt ausgebildet ist und das Verriegelungsmittel (7) von einem Sperrmittel gebildet ist, dass derart gelagert ist, dass es von dem Ausgaberohr (4) zum Entriegeln der oberen Abdeckung (6) aus der Blockierstellung heraus verdrängbar ist und wobei der Verschlussmechanismus (3) oberhalb einer, in dem Eintrittsraum angeordneten unteren Dichtklappe (2) angeordnet ist und zwei oder mehr Verriegelungsmittel (7) vorgesehen sind, die in einem Abstand (a) zu einander angeordnet sind, der derart groß ist, dass von dem Ausgaberohr (4) einer Zapfpistole mit einem ersten Durchmesser beide Verriegelungsmittel (7) entriegelbar sind, während von einer Zapfpistole mit einem relativ zum ersten Durchmesser kleineren, zweiten Durchmesser keines oder nur eines der Verriegelungselemente (7) entriegelbar ist,
**dadurch gekennzeichnet, dass**
die Verriegelungsmittel (7) von jeweils einem formschlüssig in eine Ausnehmung in der obere Abdeckung (6) eingreifenden Arretierstift gebildet sind, der gegen die Kraft einer Sicherungsfeder (9) durch das freie Ende des Ausgaberohrs (4) seitlich oder nach unten verlagerbar ist, wobei bei erfolgter Verlagerung der Eingriff des Arretierstifts mit der Ausnehmung der oberen Abdeckung (6) aufgehoben ist.

2. Deckellos verschließbarer Stutzenabschluss nach Anspruch 1, **dadurch gekennzeichnet, dass** der Stutzenabschluss oberhalb der oberen Einfüllöffnung (5) eine zur Längsachse des Rohrstücks (1) in einem Winkel (α) angeordnete Abgleitfläche (10) aufweist, längs derer das Ausgaberohr (4) bei Einsetzen in das Rohrstück (1) von einer seitlich zur oberen Einfüllöffnung (5) versetzten Anfangsposition bis zu einer zur oberen Einfüllöffnung (5) deckungsgleichen Einsteckposition abgleitend geführt ist.

3. Stutzenabschluss für einen Einfüllstutzen eines Tanks eines Kraftfahrzeugs nach einem der vorhergehenden Ansprüche, **dadurch gekennzeichnet, dass** die Verriegelungsmittel (7) einander gegenüberliegend angeordnet sind.

4. Stutzenabschluss nach Anspruch 2 **dadurch gekennzeichnet, dass** das Schiebeelement die obere Einfüllöffnung mit einem Sperrbereich teilweise überdeckt und das Ende des Ausgaberohrs (4) seitlich neben dem Sperrbereich ansetzbar ist, wobei bei Abgleiten des Ausgaberohrs (4) auf der Abgleitfläche (10) das Ausgaberohr (4) in Verschieberichtung gegen den Sperrbereich gedrückt ist und so die Verlagerung des Schiebeelements bewirkt ist.

5. Stutzenabschluss nach dem vorhergehenden Anspruch, **dadurch gekennzeichnet, dass** das Schiebeelement einen U-förmigen Innenbereich mit zwei im Wesentlichen geraden Schenkeln und einem gekrümmten Mittelbereich aufweist, wobei der Sperrbereich von einem Teil des Mittelbereichs gebildet ist und wobei die Abgleitfläche (10) neben dem Mittelbereich angeordnet und von den geraden Schenkeln wenigstens teilweise überdeckt ist.

6. Stutzenabschluss nach dem vorhergehenden Anspruch, **dadurch gekennzeichnet, dass** die Abgleitfläche (10) eine schiefe Ebene ist, deren Winkel (α) relativ zur Achse des Rohrabschnitts (1) zwischen 20° und 80°, bevorzugt zwischen 35° und 55° und weiter bevorzugt 45° beträgt.

7. Stutzenabschluss nach Anspruch 5 oder 6, **dadurch gekennzeichnet, dass** die Ausnehmungen zum Eingriff der Verriegelungselemente (7) in den geraden Schenkeln des Schiebeelementes angeordnet sind, wobei die Verriegelungselemente (7) von den Ausnehmungen ausgehend derart weit nach innen ragen, dass beide Verriegelungselemente (7) nur von einem Ausgaberohr (4) mit hinreichend großem Durchmesser niederdrückbar sind und ein Ausgaberohr (4) mit zu kleinem Durchmesser nur eines der Verriegelungselemente (7) niederzudrücken vermag.

8. Stutzenabschluss nach Anspruch 5, 6 oder 7, **dadurch gekennzeichnet, dass** der dem mittleren Bereich des Schiebeelementes abgewandte Teil der geraden Schenkel derart ausgebildet ist, dass nach einem Abgleiten des Ausgaberohrs (4) in Richtung der oberen Einfüllöffnung (5) um ein Maß, dass das Ausgaberohr (4) die Verriegelungsmittel (7) nicht weiter überdeckt, die Verriegelungsmittel (7) von den geraden Schenkeln über den weiteren Verschiebeweg niedergehalten solange sind bis das Ausgaberohr (4) in die obere Einfüllöffnung (5) einsteckbar ist.

9. Stutzenabschluss nach einem der Ansprüche 6, 7, oder 8, **dadurch gekennzeichnet, dass** das die Innenkrümmung des mittleren Bereichs des Schiebeelements im Wesentlichen der Außenkrümmung des Ausgaberohrs (4) entspricht.

10. Stutzenabschluss nach einem der vorhergehenden Ansprüche, **dadurch gekennzeichnet, dass** er eine Abdeckkappe (11) aufweist, die ein Langloch zum Einstecken des Ausgaberohrs (4) aufweist, wobei die Breite des Langlochs etwas größer als der Durchmesser des Ausgaberohrs (4) ist und die Länge des Langlochs im Wesentlichen dem Verschiebeweg des Schiebeelementes entspricht.

11. Stutzenabschluss nach einem der vorhergehenden Ansprüche, **dadurch gekennzeichnet, dass** oberhalb der oberen Einfüllöffnung (5) eine zusätzliche Verschlussklappe (12) vorgesehen ist, die durch das Ausgaberohr (4) gegen eine Federkraft aufdrückbar ist.

12. Stutzenabschluss nach dem vorhergehenden Anspruch, **dadurch gekennzeichnet, dass** die zusätzliche Verschlussklappe (12) am Verschiebeelement gelenkig gelagert ist und mit einem, dem Gelenk abgewandten Teilbereich in Schließstellung des Verschlussmechanismus in eine an der Seitenwandung des oberen Eintrittsraums oder einem relativ zu der Seitenwandung des oberen Eintrittsraums feststehenden Bauteil angeordnete Verriegelungsnut (13) eingreift.

13. Stutzenabschluss nach einem der vorhergehenden Ansprüche, **dadurch gekennzeichnet, dass** der Stutzenabschluss Über- und/oder Unterdruckventile aufweist, über die ein Überdruck oder Unterdruck im Kraftstoffbehälter durch Überbrückung der Dichtfunktion der unteren Dichtklappe (2) ausgleichbar ist.

14. Stutzenabschluss nach Anspruch 13, **dadurch gekennzeichnet, dass** das Überdruckventil von einem ersten Bypass (19) und das Unterdruckventil von einem zweiten Bypass (18) gebildet sind, wobei der erste Bypass (19) bei Verschieben eines Ventilkörpers infolge des Überdrucks in eine erste Richtung und der zweite Bypass (18) bei Verschieben eines Ventilkörpers in eine zweite Richtung infolge des Unterdrucks öffnet.

15. Stutzenabschluss Kraftfahrzeugs nach einem der vorhergehenden Ansprüche, **dadurch gekennzeichnet, dass** er auf eine übliche Befestigung für einen Tankdeckel an einem Tankstutzen, insbesondere auf ein Gewinde oder ein Bajonett, aufschraubbar ist.

16. Stutzenabschluss nach dem vorhergehenden Anspruch, **dadurch gekennzeichnet, dass** er eine Abnahmesicherung aufweist, die nur mittels eines Werkzeuges lösbar ist.

17. Stutzenabschluss nach dem vorhergehenden Anspruch, **dadurch gekennzeichnet, dass** die Abnahmesicherung von Federelementen gebildete eine Abschraubsicherung ist, wobei die Federelemente bei Aufsetzen des Stutzenabschlusses auf den Tankstutzen zum Blockieren der Abnahme des Stutzenabschlusses eine Fläche federnd hintergreifen und über ein Greifwerkzeug greifbar und zum Deaktivieren der Abschraubsicherung rückziehbar sind.

18. Stutzenabschluss nach einem der vorhergehenden Ansprüche, **dadurch gekennzeichnet, dass** oberhalb der unteren Dichtklappe (2) eine Wasserabfuhr für eindringendes Wasser oder Kondenswasser vorgesehen ist.

19. Kraftfahrzeug mit einem Einfüllstutzen eines Tanks und einem Stutzabschluss nach einem der vorhergehenden Ansprüche, wobei das Kraftfahrzeug eine Zentralverriegelung aufweist, **dadurch gekennzeichnet, dass** die Verriegelungsmittel (7) über die Zentralverriegelung des Kraftfahrzeuges derart blockierbar sind, dass eine Entriegelung nur bei in Öffnungsstellung befindlicher Zentralverriegelung möglich ist.

20. Kraftfahrzeug nach dem vorhergehenden Anspruch, **dadurch gekennzeichnet, dass** ein über die Zentralverriegelung steuerbares, oberes Verriegelungsmittelvorgesehen ist, das im verriegelten Zustand die obere Abdeckung (6) zu verriegeln vermag und über die Zentralverriegelung in einen geöffneten Zustand schaltbar ist, in dem die obere Abdeckung (6) durch Einsetzen des Ausgaberohrs (4) zum Öffnen des Verschlussmechanismus (3) verlagerbar ist.

21. Kraftfahrzeug nach einem der beiden vorhergehenden Ansprüche, **dadurch gekennzeichnet, dass** ein über die Zentralverriegelung steuerbares, unteres Verriegelungsmittel vorgesehen ist, das im verriegelten Zustand die untere Dichtklappe (2) blockiert und über die Zentralverriegelung in einen geöffneten Zustand schaltbar ist, in dem die untere Dichtklappe (2) durch das eindringende Ausgaberohr (4) schwenkbar ist.

22. Kraftfahrzeug nach einem der Ansprüche 19, 20 oder 21, **dadurch gekennzeichnet, dass** eine zentrale Schließanlage vorgesehen ist, wobei die zentrale Schließanlage die Verriegelungsmittel (7) bei laufendem Motor oder einem sonstigen, während der Betankung nicht zugelassenen laufendem Gerät, insbesondere einer Fremdheizung, in einen geschlossenen Zustand zu schalten und so die Nutzung des Einfüllstutzens von dem Abschalten des Motors oder des sonstigen Gerätes abhängig zu machen vermag.

23. Kraftfahrzeug nach einem der Ansprüche 19 bis 22, **dadurch gekennzeichnet, dass** das Kraftfahrzeug einen Sensor in Form eines Crashdetektors, eines Fahrdynamiksensors oder eines Überschlagssensors aufweist, der bei Erkennen eines kritischen Zustands ein Alarmsignal an eine, die Zentralverriegelung steuernde Bordelektronik weiterzuleiten vermag, wobei die Bordelektronik bei Auftreten des Alarmsignals die Verriegelungsmittel (7) zu verriegeln vermag.

## Claims

1. Lidlessly closable nozzle closure for a filler nozzle of a tank of a motor vehicle with
• an upper inlet space, which forms an insertion area for a pump nozzle and is surrounded by side walls,
• a closure mechanism (3), having an upper filler opening (5) and at least one cover (6) covering the upper filler opening (5) in a closed condition at least partially, which is formed by a sliding element displaceable at least in a sideways direction and designed in such a way that it is displaced upon insertion of an outlet pipe (4) of a pump nozzle into the inlet space for releasing the upper filler opening (5), to enable the insertion of the outlet pipe (4) through the upper filler opening (5), and with
• at least one locking means (7) that blocks the upper cover (6) in the closed condition for forming a guard against filling with unsuitable fuel and is designed in such a way that it can be unlocked only for filling with suitable fuel depending on the type-specific shape of the outlet pipe (4),
wherein the inlet space is designed as a pipe section (1) with a constant or changeable cross-section and the locking means (7) is formed by a blocking means mounted in such a way that it can be displaced by the outlet pipe (4) for unlocking the upper cover (6) from the blocked position, and wherein the closure mechanism (3) is arranged above a lower sealing flap (2) arranged in the inlet space, and two or more locking means (7) are envisaged, which are arranged at a distance (a) from each other, which is so large that both locking means (7) can be unlocked by the outlet pipe (4) of a pump nozzle with a first diameter, whilst none or only one of the locking elements (7) can be unlocked by a pump nozzle with a relatively smaller second diameter compared to the first diameter,
**characterised in that**
the locking means (7) are formed by an arresting pin each, positively engaging a recess in the upper cover (6), which can be displaced sideways or downwards against the force of a safety spring (9) by the free end of the outlet pipe (4), wherein the engagement of the arresting pin with the recess of the upper cover (6) is removed after this displacement.

2. Lidlessly closable nozzle closure according to claim 1, **characterised in that** the nozzle closure has a deflection surface (10) arranged above the upper filler opening (5) at an angle (α) at the longitudinal axis of the pipe section (1), along which the outlet pipe (4) is deflected and guided upon inserting the pipe section (1) from a starting position offset sideways from the upper filler opening (5) up to an insertion position that congruently covers the upper filler opening (5).

3. Nozzle closure for a filler nozzle of a tank of motor vehicle according to one of the preceding claims, **characterised in that** the locking means (7) are arranged opposite each other.

4. Nozzle closure according to claim 2, **characterised in that** the sliding element partially covers the upper filler opening with a blocked area, and **in that** the end of the outlet pipe (4) can be positioned at the side of the blocked area, wherein the outlet pipe (4) in is pressed in a displacement direction against the blocked area when the outlet pipe (4) is deflected on the deflection surface (10) and the displacement of the sliding element is effected in this way.

5. Nozzle closure according to the preceding claim, **characterised in that** the sliding element has a U-shaped inner area with two substantially straight legs and an arced central area, wherein the blocked area is formed by a part of the central area and wherein the deflection surface (10) is arranged next to the central area and at least partially covered by the straight legs.

6. Nozzle closure according to the preceding claim, **characterised in that** the deflection surface (10) is a sloped plane, the angle (α) of which relative to the axis of the pipe section (1) is between 20° and 80°, preferably between 35° and 55°, and more preferably 45°.

7. Nozzle closure according to claim 5 or 6, **characterised in that** the recesses for engaging the locking elements (7) are arranged in the straight legs of the sliding element, wherein the locking elements (7) protrude so far inwards from the recesses that both locking elements (7) can be pressed down only by an outlet pipe (4) with a sufficiently large diameter and an outlet pipe (4) with too small a diameter can press down only one of the locking elements (7).

8. Nozzle closure according to claim 5, 6 or 7, **characterised in that** the part of the straight leg facing away from the central area of the sliding element is designed in such a way that the locking means (7) are held down by the straight legs over the further displacement path following a deflection of the outlet pipe (4) in the direction of the upper filler opening (5) to an extent that the outlet pipe (4) no longer covers the locking means (7) until the outlet pipe (4) can be inserted into the upper filler opening (5).

9. Nozzle closure according to one of the claims 6, 7 or 8, **characterised in that** the inner arcing of the central area of the sliding element substantially equals the outer arcing of the outlet pipe (4).

10. Nozzle closure according to one of the preceding claims, **characterised in that** it has a cover flap (11), which has an elongated hole for inserting the outlet pipe (4), wherein the width of the elongated hole is somewhat greater than the diameter of the outlet pipe (4) and the length of the elongated hole substantially equals the displacement path of the sliding element.

11. Nozzle closure according to one of the preceding claims, **characterised in that** an additional closing flap (12) that can be pressed open by the outlet pipe (4) against a spring force is envisaged above the upper filler opening (5).

12. Nozzle closure according to the preceding claim, **characterised in that** the additional closing flap (12) is hinge-mounted on the sliding element and engages a locking groove (13) arranged in a side wall of the upper inlet space or a component fixed relative to the side wall of the upper inlet space with a part area facing away from the joint in a closed position of the closure mechanism.

13. Nozzle closure according to one of the preceding claims, **characterised in that** the nozzle closure has over- and/or underpressure valves, via which an overpressure or underpressure in the fuel tank can be compensated by bridging the sealing function of the lower sealing flap (2).

14. Nozzle closure according to claim 13, **characterised in that** the overpressure valve is formed by a first bypass (19) and the underpressure valve by a second bypass (18), wherein the first bypass (19) opens in a first direction upon displacing a valve body due to overpressure, and the second bypass (18) in a second direction due to underpressure upon displacing a valve body.

15. Nozzle closure of a motor vehicle according to one of the preceding claims, **characterised in that** it can be screwed onto a common fitting for a tank lid on a tank nozzle, in particular onto a thread or a bayonet.

16. Nozzle closure according to the preceding claim, **characterised in that** it has a removal guard that can be disconnected only with a tool.

17. Nozzle closure according to the preceding claim, **characterised in that** the removal guard is an unscrewing guard formed by spring elements, wherein the spring elements flexibly engage behind a surface upon positioning the nozzle closure on the tank nozzle for blocking a removal of the nozzle closure, and can be held with a gripping tool and retracted for deactivating the unscrewing guard.

18. Nozzle closure according to one of the preceding claims, **characterised in that** a water outlet for incoming water or condensation water is envisaged above the lower sealing flap (2).

19. Motor vehicle with a filler nozzle of a tank and a nozzle closure according to one of the preceding claims, wherein the motor vehicle has central locking, **characterised in that** the locking means (7) can be blocked via the central locking of the motor vehicle in such a way that an unlocking is possible only when the central locking is in an open position.

20. Motor vehicle according to the preceding claim, **characterised in that** an upper locking means controllable via the central locking is envisaged, which can lock the upper cover (6) in a locked condition and can be switched into an open condition via the central locking **in that** the upper cover (6) can be displaced by inserting the outlet pipe (4) for opening the closure mechanism (3).

21. Motor vehicle according to one of the preceding claims, **characterised in that** a lower locking means controllable via the central locking is envisaged, which blocks the lower sealing flap (2) in a locked condition and can be switched into an open condition via the central locking **in that** the lower sealing flap (2) can be pivoted by the incoming outlet pipe (4).

22. Motor vehicle according to one of the claims 19, 20 or 21, **characterised in that** a central closure system is envisaged, wherein the central closure system can switch the locking means (7) to a closed condition when the engine, or another unit not allowed to run during refuelling, in particular an external heater, is running and will thus make use of the filler nozzle dependent on switching off the engine or other unit.

23. Motor vehicle according to one of the claims 19 to 22, **characterised in that** the motor vehicle has a sensor in the form of a crash detector, a driving dynamics sensor or a rollover sensor that can transmit an alarm signal to on-board electronics controlling the central locking upon detection of a critical condition, wherein the on-board electronics can lock the locking means (7) when the alarm signal occurs.

## Revendications

1. Embout de tubulure pour une tubulure de remplissage pouvant être fermé sans couvercle d'un réservoir de véhicule comprenant
• un espace d'entrée supérieur qui forme une zone pour insérer un pistolet distributeur et qui est entouré d'une paroi latérale,
• un mécanisme de verrouillage (3) qui présente un orifice de remplissage supérieur (5) et au moins un cache supérieur (6) recouvrant au moins partiellement l'orifice de remplissage supérieur (5) à l'état fermé, ledit cache est défini par un élément coulissant déplaçable au moins dans le sens latéral et réalisé de façon à être déplacé en introduisant un tube de distribution (4) d'un pistolet distributeur dans l'espace d'entrée pour libérer l'orifice de remplissage supérieur (5) afin de permettre l'insertion du tube de distribution (4) à travers l'orifice de remplissage supérieur (5) et
• au moins un moyen de verrouillage (7) qui forme une sécurité anti-remplissage avec un mauvais carburant bloquant le cache supérieur (6) à l'état fermé et réalisé de façon à ne pouvoir être déverrouillé qu'en situation de remplissage avec le bon carburant, en fonction de la forme spécifique de nature du tube de distribution (4),
l'espace d'entrée étant réalisé comme une pièce tubulaire (1) à la section constante ou variable et le moyen de verrouillage (7) étant défini par un moyen de blocage qui est logé de façon à pouvoir être déplacé de la position de blocage par le tube de distribution (4) afin de déverrouiller le cache supérieur (6) et le mécanisme de verrouillage (3) étant disposé en dessus d'un clapet d'étanchéité inférieur (2) situé dans l'espace d'entrée et deux ou plus moyens de verrouillage (7) étant prévus, écartés d'une distance (a) l'un par rapport à l'autre, la distance (a) étant telle que les deux moyens de verrouillage (7) peuvent être déverrouillés par le tube de distribution (4) d'un pistolet distributeur d'un premier diamètre tandis qu'un pistolet distributeur d'un second diamètre plus petit que le premier diamètre ne permet pas de déverrouiller l'ensemble des éléments de verrouillage (7) ou bien un seul d'entre eux.
**caractérisé en ce que**
les moyens de verrouillage (7) sont formés par une cheville d'arrêt s'insérant par complémentarité de forme dans un évidement réalisé dans le cache supérieur (6), ladite cheville pouvant être déplacée en côté ou vers le bas à travers l'extrémité libre du tube de distribution (4), contre la force d'un ressort de sécurité (9), l'emprise de la cheville d'arrêt sur l'évidement du cache supérieur (6) cessant une fois le déplacement réussi.

2. Embout de tubulure pouvant être fermé sans couvercle selon la revendication 1, **caractérisé en ce que** l'embout de tubulure présente une surface de glissement (10) étant disposée au-dessus de l'orifice de remplissage supérieur (5), selon un angle (α) par rapport à l'axe longitudinal de la pièce tubulaire (1), le tube de distribution (4) étant guidé de façon glissante le long de ladite surface de glissement lors de l'insertion dans la pièce tubulaire (1), d'une position de départ décalée en côté par rapport à l'orifice de remplissage supérieur (5) jusqu'à une position d'insertion coïncidente à la saillie de l'orifice de remplissage supérieur (5).

3. Embout de tubulure pour une tubulure de remplissage d'un réservoir d'un véhicule selon l'une des revendications précédentes, **caractérisé en ce que** les moyens de verrouillage (7) sont disposés opposés l'un à l'autre.

4. Embout de tubulure selon la revendication 2, **caractérisé en ce que** l'élément coulissant recouvre en partie l'orifice de remplissage supérieur avec une zone de blocage et **en ce que** l'extrémité du tube de distribution (4) peut être appliquée sur le côté à proximité de la zone de blocage, le tube de distribution (4) étant plaqué dans la direction de coulissement contre la zone de blocage par glissement du tube de distribution (4) sur la surface de glissement (10) provoquant ainsi le déplacement de l'élément coulissant.

5. Embout de tubulure selon la revendication précédente, **caractérisé en ce que** l'élément coulissant présente une zone intérieure en U avec deux montants essentiellement rectilignes et une zone centrale incurvée, la zone de blocage étant formée par une partie de la zone centrale et la surface de glissement (10) étant disposée à côté de la zone centrale et recouverte au moins en partie par les montants rectilignes.

6. Embout de tubulure selon la revendication précédente, **caractérisé en ce que** la surface de glissement (10) est un plan oblique, l'angle (α) étant compris entre 20° et 80°, de préférence entre 35° et 55° et encore plus préférablement de 45° par rapport à l'axe du segment tubulaire (1).

7. Embout de tubulure selon la revendication 5 ou 6, **caractérisé en ce que** les évidements servant à l'insertion des éléments de verrouillage (7) sont disposés dans les montants rectilignes de l'élément coulissant, les éléments de verrouillage (7) saillant vers l'intérieur depuis les évidements de telle façon que les deux éléments de verrouillage (7) ne peuvent être comprimés vers le bas que par un tube de distribution (4) de diamètre suffisant et qu'un tube de distribution (4) ne peut comprimer vers le bas qu'un des éléments de verrouillage (7) lorsque son diamètre est trop petit.

8. Embout de tubulure selon la revendication 5, 6 ou 7, **caractérisé en ce que** la partie des montants rectilignes écartée de la zone centrale de l'élément coulissant est réalisée de telle sorte qu'après un glissement du tube de distribution (4) en direction de l'orifice de remplissage supérieur (5), dans une mesure telle que le tube de distribution (4) ne recouvre plus les moyens de verrouillage (7), les moyens de verrouillage (7) sont maintenus descendus pendant la course de déplacement par les montants rectilignes, jusqu'à insertion du tube de distribution (4) dans l'orifice de remplissage supérieur (5).

9. Embout de tubulure selon l'une des revendications 6, 7 et 8, **caractérisé en ce que** la courbure intérieure de la zone centrale de l'élément coulissant coïncide pour l'essentiel avec la courbure extérieure du tube de distribution (4).

10. Embout de tubulure selon l'une des revendications précédentes, **caractérisé en ce qu'**il comporte un capuchon couvrant (11) comportant un trou oblong pour l'insertion du tube de distribution (4), la largeur du trou oblong étant quelque peu supérieure au diamètre du tube de distribution (4) et la longueur du trou oblong coïncidant pour l'essentiel avec la course de coulissement de l'élément coulissant.

11. Embout de tubulure selon l'une des revendications précédentes, **caractérisé en ce qu'**un capuchon de fermeture supplémentaire (12) est prévu au-dessus de l'orifice de remplissage supérieur (5), ledit capuchon pouvant être ouvert par pression à travers le tube de distribution (4) en allant contre une force de ressort.

12. Embout de tubulure selon la revendication précédente, **caractérisé en ce que** le capuchon de fermeture supplémentaire (12) est disposé de façon articulée au niveau de l'élément coulissant et s'insère dans une encoche de verrouillage (13) disposée sur la paroi latérale de l'espace d'entrée supérieur ou sur un élément fixe par rapport à la paroi latérale de l'espace d'entrée supérieur en position fermée du mécanisme de verrouillage, avec une zone partielle opposée à l'articulation.

13. Embout de tubulure selon l'une des revendications précédentes, **caractérisé en ce que** l'embout de tubulure comporte des soupapes de surpression et/ou de sous-pression par l'intermédiaire desquelles une surpression ou une sous-pression s'exerçant dans le réservoir de carburant peut être compensée en court-circuitant la fonction d'étanchéité du clapet d'étanchéité inférieur (2).

14. Embout de tubulure selon la revendication 13, **caractérisé en ce que** la soupape de surpression comporte un premier by-pass (19) et la soupape de sous-pression un deuxième by-pass (18), le premier by-pass (19) s'ouvrant par déplacement d'un corps de soupape dans une première direction suite à une surpression et le deuxième by-pass (18) s'ouvrant par déplacement d'un corps de soupape dans une deuxième direction suite à une sous-pression.

15. Embout de tubulure de véhicule selon l'une des revendications précédentes, **caractérisé en ce qu'**il peut être vissé sur une fixation courante de bouchon de réservoir au niveau d'une tubulure de réservoir, notamment sur un filetage ou une baïonnette.

16. Embout de tubulure selon la revendication précédente, **caractérisé en ce qu'**il comporte une sécurité anti-enlèvement qui ne peut être détachée qu'à l'aide d'un outil.

17. Embout de tubulure selon la revendication précédente, **caractérisé en ce que** la sécurité anti-enlèvement est une sécurité anti-dévissage formée d'éléments à ressort, les éléments à ressort saisissant par l'arrière de manière souple une surface en posant l'embout de tubulure sur la tubulure du réservoir pour bloquer l'enlèvement de l'embout de tubulure et pouvant être pris à l'aide d'un outil de préhension et être retirés pour désactiver la sécurité anti-dévissage.

18. Embout de tubulure selon l'une des revendications précédentes, **caractérisé en ce qu'**une évacuation d'eau est prévue au-dessus du clapet d'étanchéité inférieur (2) pour l'eau ayant pénétré le système ou la condensation s'étant formée dans celui-ci.

19. Véhicule avec une tubulure de remplissage d'un réservoir et un embout de tubulure selon l'une des revendications précédentes, le véhicule comportant un verrouillage centralisé, **caractérisé en ce que** les moyens de verrouillage (7) peuvent être bloqués par le verrouillage centralisé du véhicule de telle sorte qu'un déverrouillage n'est possible que lorsque le verrouillage centralisé est en position ouverte.

20. Véhicule selon la revendication précédente, **caractérisé en ce qu'**un moyen de verrouillage supérieur pouvant être commandé par le verrouillage centralisé est prévu, ledit moyen de verrouillage peut verrouiller le cache supérieur (6) à l'état verrouillé et être commuté par le verrouillage centralisé à un état ouvert dans lequel le cache supérieur (6) peut être déplacé pour ouvrir le mécanisme de verrouillage (3) par insertion du tube de distribution (4).

21. Véhicule selon l'une des deux revendications précédentes, **caractérisé en ce qu'**un moyen de verrouillage inférieur pouvant être commandé par le verrouillage centralisé est prévu, ledit moyen de verrouillage bloque le clapet d'étanchéité inférieur (2) à l'état verrouillé et peut être commuté par le verrouillage centralisé à un état ouvert dans lequel le clapet d'étanchéité inférieur (2) est orientable par insertion du tube de distribution (4).

22. Véhicule selon l'une des revendications 19, 20 ou 21, **caractérisé en ce qu'**un système de fermeture centralisé est prévu, le système de fermeture centralisé étant en mesure de commuter les moyens de verrouillage (7) à un état fermé pendant que le moteur tourne ou un autre appareil non autorisé pendant le remplissage, notamment un chauffage tiers, marche et donc de faire dépendre l'utilisation de la tubulure de remplissage de la coupure du moteur ou de l'autre appareil.

23. Véhicule selon l'une des revendications 19 à 22, caractérisé en ce le véhicule comporte un capteur sous la forme d'un détecteur de collision, d'un capteur de la dynamique de conduite ou d'un capteur de capotage, qui est capable, s'il détecte un état critique, de transmettre un signal d'alarme à un équipement électronique de bord commandant le verrouillage centralisé, l'équipement électronique de bord étant en mesure de verrouiller les moyens de verrouillage (7) si le signal d'alarme est émis.
